# EUROPÄISCHE PATENTANMELDUNG

(11) **EP 1 982 589 A1**
(43) Veröffentlichungstag der Anmeldung: **22.10.2008**
(21) Anmeldenummer: 08005247.5
(22) Anmeldetag: 20.03.2008
(51) Int. Cl.: A01L 1/04

(54) **Hufschutz für Pferde oder dergleichen Huftiere**

(30) Priorität: 18.04.2007 DE 102007018602
(71) Anmelder: Grässler, Thomas, Dipl.-Wirtsch.-Ing, 93049 Regensburg (DE); Pellkofer, Rudolf, 94360 Mitterfels (DE)
(72) Erfinder: Grässler, Thomas, Dipl.-Wirtsch.-Ing, 93049 Regensburg (DE); Pellkofer, Rudolf, 94360 Mitterfels (DE)
(74) Vertreter: Graf, Helmut

(57) **Zusammenfassung**

Bei einem Hufschutz (3) für Pferde mit einem am Huf befestigbaren hufeisenförmigen Basis- oder Trägerteil (4) und einem an diesem Basisteil auswechselbar befestigten Laufbelag (5) ist am Basisteil wenigstens ein Abstütz- und/oder Fixierelement (7) vorgesehen, welches eine seitliche Abstützung des Laufbelages (5) zumindest an einer Außenseite des Hufschutzes (3) bildet.

## Beschreibung

Die Erfindung bezieht sich auf einen Hufschutz gemäß Oberbegriff Patentanspruch 1.

Ein Hufschutz dieser Art ist grundsätzlich bekannt (DE 196 30 660) und bietet u.a. den Vorteil, das der Laufbelag als Verschleißelement ausgetauscht bzw. erneuert werden kann, während das Basis- oder Trägerteil am Huf verbleibt, ein bei einem Neubeschlag notwendiges Nageln, welches vielfach auch zu Verletzungen des Pferdehufes führt, also nicht mehr notwendig ist.

Aufgabe der Erfindung ist es, einen weiter verbesserten Hufschutz aufzuzeigen. Zur Lösung dieser Aufgabe ist ein Hufschutz entsprechend dem Patentanspruch 1 ausgebildet.

Durch das Fixierelement wird eine wirksame Abstützung des Laufbelages erreicht, und zwar insbesondere auch gegen ein seitliches Ausweichen in Richtung Außenseite des Hufschutzes.

Ebenso wie der Laufbelag ist auch das wenigstens eine Fixierelement wieder lösbar am Basisteil vorgesehen, sodass das Fixierelement im Bedarfsfall mit dem Laufbelag ausgetauscht werden kann. Weiterhin besteht die Möglichkeit, dass wenigstens eine Fixierelement als Bestandteil des Basisteils und/der des Laufbelages auszubilden.

In Weiterbildung der Erfindung besteht die Möglichkeit, den Hufschutz so auszubilden,
dass das Abstütz- und/oder Fixierelement am Basisteil vorgesehen ist
   und/oder
dass das Abstütz- und/oder Fixierelement am Laufbelag vorgesehen ist,
   und/oder
dass das Abstütz- und/oder Fixierelement eine seitliche Abstützung des Laufbelages zumindest an einer Außenseite des Hufschutzes bildet,
   und/oder
dass das Basisteil aus Metall oder Stahl hergestellt ist,
   und/oder
dass der Laufbelag aus Nichtmetall, beispielsweise aus Kunststoff oder einem gummi- bzw. hartgummiartigen Material gefertigt ist,
   und/oder
dass der Laufbelag hufeisenartig ausgebildet ist,
   und/oder
dass der Laufbelag im montierten Zustand das hufeisenförmige Basisteil an der Unterseite des Hufschutzes abdeckt,
   und/oder
dass der Laufbelag mit einer außen liegenden Fläche bündig oder im Wesentlichen bündig mit einer außen liegenden Fläche des Basisteils angeordnet ist,
   und/oder
dass der Laufbelag mit einer innen liegenden Fläche über eine innen liegende Fläche des Basisteils vorsteht,
   und/oder
dass das Fixierelement Teil des Basisteils ist,
   und/oder
dass das Fixierelement ein am Basisteil und/oder am Laufbelag abnehmbar befestigtes Element ist,
   und/oder
dass das Fixierelement reiterartig das Basisteil und/oder den Laufbelag übergreifend befestigt ist,
   und/oder
dass das Fixierelement durch Klemmen und/oder Kleben und/oder Verschrauben am Basisteil gehalten ist,
   und/oder
dass das Fixierelement aus einem Flachmaterial, vorzugsweise aus einem metallischen, federnden Flachmaterial, beispielsweise aus Federstahl hergestellt ist,
   und/oder
dass das Fixierelement an einem Jochabschnitt wenigstens zwei über eine gemeinsame Seite dieses Jochabschnittes wegstehende Schenkel zur Bildung eines das Basisteil übergreifenden Abschnitts sowie zumindest einen über die andere Oberflächenseite des Jochabschnittes wegstehenden weiteren Schenkel aufweist, der die seitliche Abstützung für den Laufbelag bildet,
wobei die vorgenannten Merkmale jeweils einzeln oder in beliebiger Kombination vorgesehen sein können.

In Weiterbildung der Erfindung besteht weiterhin die Möglichkeit, das Fixierelement zur Verwendung bei einem Hufschutz so auszubilden,
dass der am Basisteil oder am Laufbelag des Hufschutzes zu befestigende Abschnitt als U-Profil ausgebildet ist,
   und/oder
dass in dem am Basisteil des Hufschutzes zu befestigenden Abschnitt wenigstens einen Öffnung für eine Befestigungsschraube vorgesehen ist,
wobei die vorgenannten das Fixierelement betreffenden Merkmale ebenfalls jeweils einzeln oder in beliebiger Kombination vorgesehen sein können.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:

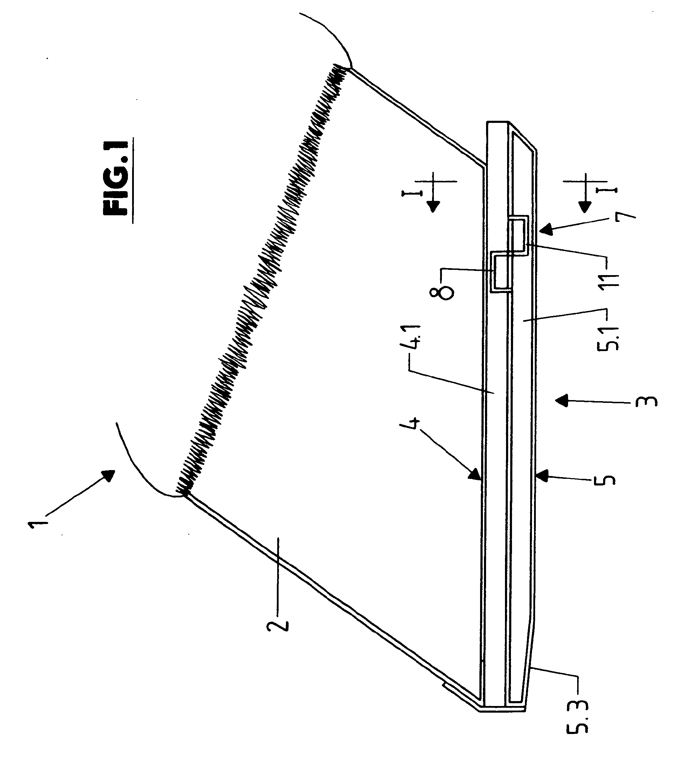

- Fig. 1: in vereinfachter Darstellung und in Seitenansicht einen Pferdehuf, zusammen mit einem an diesem Huf befestigten mehrteiligen Hufschutz;
- Fig. 2: einen Schnitt durch den Hufschutz entsprechend der Linie I-I der Figur 1;
- Fig. 3: in Einzeldarstellung eine Draufsicht auf das Basis- oder Trägerteil des mehrteiligen Hufschutzes der Figuren 1 und 2;

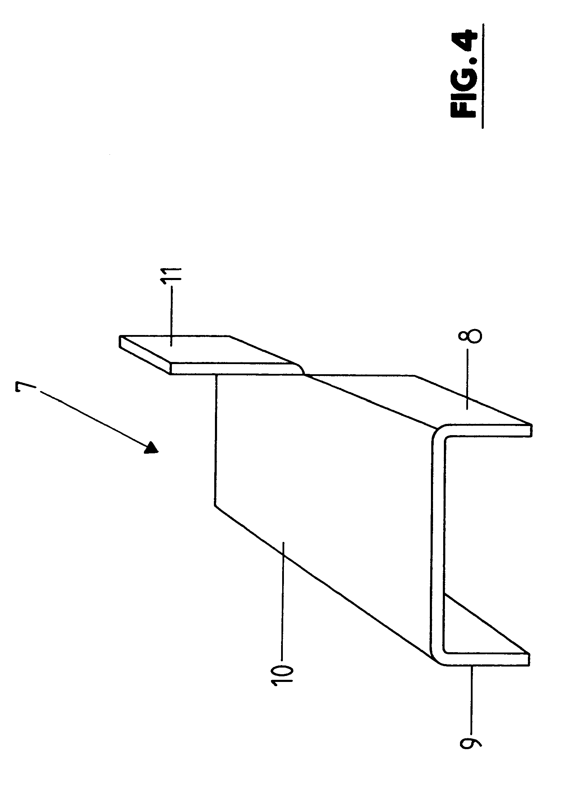

- Fig. 4: in Einzeldarstellung eines der Fixierelemente zum zusätzlichen Fixieren und Abstützen des Laufbelages am Basis- oder Trägerteil.

In den Figuren ist 1 der Fuß eines Pferdes mit dem Pferdehuf 2, an dem an Stelle eines herkömmlichen Hufeisens ein mehrteiliger Hufschutz 3 befestigt ist. Dieser besteht im Wesentlichen aus einem beispielsweise aus Stahl hufeisenartig geformten Basis- oder Trägerteil 4, der beispielsweise durch Nageln oder in anderer geeigneter Weise, beispielsweise auch nagellos am Huf 2 befestigt ist und einen rechteckförmigen Querschnitt mit gleichbleibender Breite und Dicke aufweist.

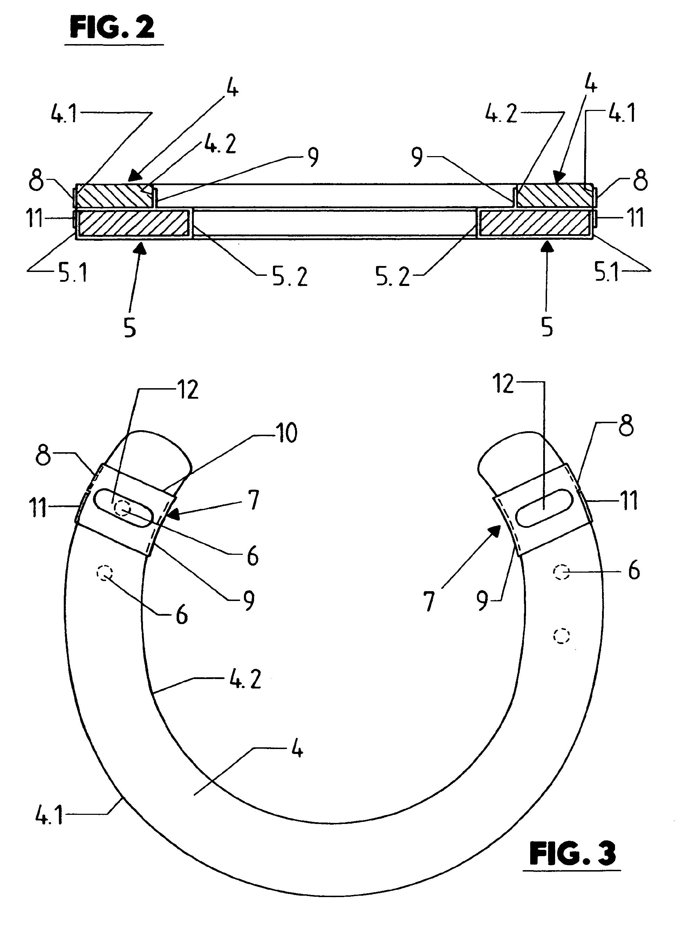

Der Hufschutz 3 besteht weiterhin aus dem Laufbelag 5, der beispielsweise aus einem verschleißfesten Kunststoff oder hartgummiartigen Werkstoff hufeisenartig geformt ist und im montierten Zustand das Basisteil 4 an der Unterseite des Pferdehufes 2 vollständig abdeckt. Bei der dargestellten Ausführungsform weist der Laufbelag 5 eine Breite auf, die größer ist als die Breite des hufeisenartigen Basisteils 4, sodass der Laufbelag 5 zwar mit seiner bezogen auf die Hufeisenform außen liegenden Fläche 5.1 bündig mit der außen liegenden Fläche 4.1 des Basisteils 4 angeordnet ist, mit seiner innen liegenden Fläche 5.2 aber über die innen liegende Fläche 4.2 des Basisteils 4 vorsteht, wie dies insbesondere in der Figur 2 dargestellt ist.

Der Laufbelag 5, der an der Hufvorderseite bei 5.3 an seiner dem Basisteil 4 abgewandten Lauffläche derart abgeschrägt ist, dass sich dort die Dicke des Laufbelages 5 zur Hufvorderseite hin reduziert, ist mit geeigneten Mitteln wieder lösbar am Basisteil 5 gehalten, beispielsweise durch Kleben und/oder durch Verschrauben mit in Gewindebohrungen 6 des Basisteils 4 eingreifenden Schrauben usw. Um die erforderliche seitliche Stabilität für den am Basisteil 4 montierten Laufbelag 5 insbesondere auch an der offenen Seite der U- oder Hufeisenform dieses Belages zu erreichen, sind Fixierelemente 7 vorgesehen, die bei der dargestellten Ausführungsform aus einem federelastischen Flachmaterial, beispielsweise aus Federstahl derart gefertigt sind, dass sie mit einem von Schenkeln 8 und 9 und von einem diese Schenkel verbindenden Jochabschnitt 10 gebildeten U-Profil das Basisteil 4 an seiner dem Huf 2 abgewandten Unterseite klemmend so übergreifen, dass die beiden Schenkel 8 und 9 an den Seiten 4.1 bzw. 4.2 mit Federkraft anliegen, und zwar der Schenkel 8 an der äußeren Seite 4.1 und der Schenkel 9 an der inneren Seite 4.2. Der Schenkel 8 ist im Vergleich zum Schenkel 9 verkürzt, z.B. nur mit halber Länge ausgebildet, und zwar dadurch, dass ein Teil des das Fixierelement 7 bildenden Materialzuschnitts so umgebogen ist, dass dieser Teil einen weiteren Schenkel 11 bildet, der über die den Schenkeln 8 und 9 abgewandte Seite des Jochabschnittes 10 vorsteht.

Bei montiertem Hufschutz 3 liegt der jeweilige Schenkel 11 an der Außenseite 5.1 des Laufbelages 5 an, sodass hierdurch über jedes, mit den Schenkeln 8 und 9 am Basisteil 4 gehaltenes Fixierelement 7 eine seitliche Abstützung des Laufbelages 5 erreicht ist, die ein Ausweichen des Laufbelages 5 nach außen verhindert. Die Fixierelemente 7 werden in geeigneter Weise zwischen dem Basisteil 4 und dem Laufbelag 5 gesichert, und zwar zum Beispiel durch Verkleben und/oder durch Verschrauben. Für das Verschrauben ist im Jochabschnitt 10 ein Langloch 12 vorgesehen, und zwar für den Durchtritt einer nicht dargestellten, den Laufbelag 5 sichernden und in eine Gewindebohrung 6 eingreifenden Schraube.

Ebenso wie der Laufbelag 5 sind auch die Fixierteile 7 austauschbare Verschleißteile. Lediglich das Basisteil 4 verbleibt jeweils am Pferdehuf 2.

Die Erfindung wurde voranstehend an einem Ausführungsbeispiel beschrieben. Es versteht sich, dass zahlreiche Änderungen sowie Abwandlungen möglich sind, ohne das dadurch der der Erfindung zugrunde liegende Erfindungsgedanke verlassen wird.

### Bezugszeichenliste

- 1: Pferdefuß
- 2: Pferdehuf
- 3: Hufschutz
- 4: Basis- oder Trägerteil
- 4.1: Außenfläche des Trägerteils 4
- 4.2: Innenfläche des Trägerteils 4
- 5: Laufbelag
- 5.1: Außenfläche des Laufbelages
- 5.2: Innenfläche des Laufbelages
- 6: Gewindebohrung
- 7: Fixierelement
- 8, 9: Schenkel
- 10: jochabschnitt
- 11: Schenkel
- 12: Langloch

## Patentansprüche

1. Hufschutz für Pferde oder dergleichen Huftiere, mit einem am Huf (2) befestigbaren hufeisenförmigen Basis- oder Trägerteil (4), welches zumindest teilweise beispielsweise aus Metall oder Stahl hergestellt ist, und mit einem an diesem Basisteil (4) auswechselbar befestigten Laufbelag (5), welcher zumindest teilweise beispielsweise aus Nichtmetall, beispielsweise aus Kunststoff oder einem gummi- bzw. hartgummiartigen Material gefertigt ist,
**gekennzeichnet durch** wenigstens ein Abstütz- und/oder Fixierelement (7), welches eine Abstützung zumindest gegen ein seitliche Ausweichen des Laufbelages (5) zur Außenseite des Hufschutzes (3) bildet.

2. Hufschutz nach Anspruch 1, **dadurch gekennzeichnet, dass** das Abstütz- und/oder Fixierelement (7) am Basisteil (4) und/oder am Laufbelag (5) vorgesehen ist.

3. Hufschutz nach Anspruch 1 oder 2, **dadurch gekennzeichnet, dass** das Abstütz- und/oder Fixierelement (7) eine seitliche Abstützung des Laufbelages (5) zumindest an einer Außenseite des Hufschutzes (3) bildet.

4. Hufschutz nach einem der vorhergehenden Ansprüche, **dadurch gekennzeichnet, dass** der Laufbelag (5) hufeisenartig ausgebildet ist und/oder im montierten Zustand das hufeisenförmige Basisteil (4) an der Unterseite des Hufschutzes abdeckt.

5. Hufschutz nach einem der vorhergehenden Ansprüche, **dadurch gekennzeichnet, dass** der Laufbelag (5) mit einer außen liegenden Fläche (5.1) bündig oder im Wesentlichen bündig mit einer außen liegenden Fläche (4.1) des Basisteils (4) angeordnet ist und/oder
mit einer innen liegenden Fläche (5.2) über eine innen liegende Fläche (4.2) des Basisteils (4) vorsteht.

6. Hufschutz nach einem der vorhergehenden Ansprüche, **dadurch gekennzeichnet, dass** das Fixierelement Teil des Basisteils (4) oder ein am Basisteil (4) und/oder am Laufbelag (5) abnehmbar befestigtes Element ist.

7. Hufschutz nach einem der vorhergehenden Ansprüche, **dadurch gekennzeichnet, dass** das Fixierelement (7) reiterartig das Basisteil (4) und/oder den Laufbelag (5) übergreifend befestigt ist.

8. Hufschutz nach einem der vorhergehenden Ansprüche, **dadurch gekennzeichnet, dass** das Fixierelement durch Klemmen und/oder Kleben und/oder Verschrauben am Basisteil (4) gehalten ist.

9. Hufschutz nach einem der vorhergehenden Ansprüche, **dadurch gekennzeichnet, dass** das Fixierelement aus einem Flachmaterial, vorzugsweise aus einem metallischen, federnden Flachmaterial, beispielsweise aus Federstahl hergestellt ist.

10. Hufschutz nach einem der vorhergehenden Ansprüche, **dadurch gekennzeichnet, dass** das Fixierelement (7) an einem Jochabschnitt (10) wenigstens zwei über eine gemeinsame Seite dieses Jochabschnittes wegstehende Schenkel (8, 9) zur Bildung eines das Basisteil (4) übergreifenden Abschnitts sowie zumindest einen über die andere Oberflächenseite des Jochabschnittes (10) wegstehenden weiteren Schenkel (11) aufweist, der die seitliche Abstützung für den Laufbelag (5) bildet.

11. Fixierelement zur Verwendung bei einem Hufschutz nach einem der vorhergehenden Ansprüche, **gekennzeichnet durch** seine Herstellung aus einem Flachmaterial, beispielsweise aus einem metallischen Flachmaterial, mit einem am Basisteil (4) oder am Laufbelag (5) des Hufschutzes (3) befestigbaren Abschnitt (8, 9, 10), an welchem wenigstens ein eine seitliche Abstützung für den Laufbelag (5) oder das Basisteil (4) bildender Schenkel (11) vorgesehen ist.

12. Fixierelement nach Anspruch 11, **dadurch gekennzeichnet, dass** der am Basisteil (4) oder am Laufbelag (5) des Hufschutzes (3) zu befestigende Abschnitt als U-Profil ausgebildet ist,
und/oder
dass in dem am Basisteil (4) des Hufschutzes (3) zu befestigenden Abschnitt wenigstens einen Öffnung (12) für eine Befestigungsschraube vorgesehen ist.
